# DEMANDE DE BREVET EUROPEEN

(11) **EP 0 851 674 A2**
(43) Date de publication de la demande: **01.07.1998**
(21) Numéro de dépôt: 97403104.9
(22) Date de dépôt: 19.12.1997
(51) Int. Cl.: H04N 5/225

(54) **Caméra électronique panoramique**

(30) Priorité: 24.12.1996 CA 2194002
(71) Demandeur: HYDRO-QUEBEC, Montréal, Québec H2Z 1Z2 (CA)
(72) Inventeur: Girard, Pierre, St-Marc sur Richellieu, Quebec, JOL 3EO (CA); Pelletier, Jean-Guy, Chambly, Quebec, J3L 1G7 (CA); Coté, Jean, Ste-Julie, Quebec, JOL 2S0 (CA)
(74) Mandataire: Habasque, Etienne Joel Jean-François

(57) **Abrégé**

La caméra panoramique selon l'invention est un boîtier (10) ayant une première partie (3) et une deuxième partie (5), coaxiales à un axe de rotation (2). La deuxième partie (5) peut être entraînée en rotation autour de l'axe (2) par rapport à la première partie (3) par un moteur relié à un engrenage. Une lentille (7) est montée sur la deuxième partie (5) du boîtier et est orientée perpendiculairement et radialement à l'axe. Un capteur linéaire CCD est placé au foyer de la lentille de façon à pouvoir recueillir les images transmises par la lentille (7). Un convertisseur analogique-numérique est relié au capteur linéaire pour convertir le signal analogique provenant de celui-ci en information numérique. L'information numérique provenant du convertisseur analogique-numérique est stockée sur une unité de disque dur, en incluant des données relatives à l'azimut de la caméra. Enfin, un micro-ordinateur contrôle la rotation du boîtier (10), envoie un signal de contrôle au convertisseur analogique-numérique afin de numériser l'image et envoie un signal à l'unité de disque dur de stocker l'information numérique transmise par le convertisseur.

## Description

### DOMAINE DE L'INVENTION

La présente invention concerne une caméra électronique panoramique.

### DESCRIPTION DE L'ART ANTÉRIEUR

Les caméras panoramiques traditionnelles utilisent une pellicule photographique ordinaire, montée dans un boîtier pouvant être entraîné en rotation à mesure que la pellicule avance. La rotation de la caméra est synchronisée avec l'avancement de la pellicule pour créer une impression photographique sur la pellicule représentant une vue panoramique quelconque. En général, la caméra peut effectuer une rotation entre 0° et 360°.

Le désavantage de ces caméras est que l'utilisateur doit attendre que la pellicule soit développée avant de pouvoir voir le résultat. Ce développement peut prendre quelques heures, voire quelques jours. De plus, le temps d'exposition de la pellicule est long, ce qui n'est pas avantageux pour certaines applications. Par exemple, dans le cas de la gestion d'un réseau de câbles souterrains, électrique, téléphonique ou autre, il est commun de régulièrement faire un relevé des câbles y passant pour évaluer la capacité du réseau ainsi que les possibilités de croissance.

Auparavant, ces relevés se faisaient manuellement par une personne descendant dans le puits d'accès pour y dessiner les câbles. Autrement, on peut utiliser une caméra ordinaire pour prendre une série de photos, avec les inconvénients de mauvais éclairage et de manque de repères spatiaux. De plus, lorsqu'il s'agit de faire un relevé dans un puits d'accès d'un réseau électrique, il existe un rique d'explosion des câbles sous tension. Il est donc préférable de limiter le nombre de personnes descendant dans un puits d'accès.

Il existe d'autres types de caméras utilisant une lentille à grand angulaire pour tenter d'obtenir des vues panoramiques. Cependant, le champ de visée d'une telle lentille est d'environ 180°. Par conséquent, pour obtenir un panorama de 360°, un utilisateur doit "coller" au moins deux panoramas ensemble, ce qui nécessite une très haute précision lors de l'assemblage des deux panoramas.

### SOMMAIRE DE L'INVENTION

L'invention a pour objet une caméra électronique panoramique. Cette caméra panoramique comprend un boîtier ayant un axe longitudinal. Ce boîtier comprend une première partie coaxiale à l'axe et une deuxième partie également coaxiale l'axe, cette deuxième partie pouvant être entraînée en rotation autour de l'axe longitudinal par rapport à la première partie. Des moyens sont prévus à cet effet pour entraîner en rotation la deuxième partie du boîtier

Une lentille est montée sur la deuxième partie du boîtier. Cette lentille est orientée perpendiculairement et radialement à l'axe longitudinal.

Un capteur linéaire CCD est placé au foyer de la lentille de façon à pouvoir recueillir les images transmises par la lentille. Ce capteur linéaire a une entrée pour un signal de contrôle et une sortie de signal analogique représentant une ligne de l'image.

Un convertisseur analogique-numérique est relié au capteur linéaire pour convertir le signal analogique provenant de celui-ci en information numérique. Ce convertisseur a une entrée pour le signal analogique provenant du capteur linéaire, une entrée pour un signal de contrôle et une sortie pour l'information numérique.

Des moyens sont prévus pour stocker l'information numérique provenant du convertisseur analogique-numérique.

Des moyens sont également prévus pour encoder l'azimut de la caméra. Ces moyens ont une sortie pour des données relatives à l'azimut.

Enfin, un système de contrôle est prévu pour contrôler la rotation du boîtier, envoyer un signal de contrôle au convertisseur analogique-numérique de numériser l'image et envoyer un signal aux moyens pour stocker l'information numérique transmise par le convertisseur.

Ainsi, en pratique, lorsque la deuxième partie du boîtier est entraînée en rotation, le système de contrôle envoie d'une part un signal de contrôle au convertisseur analogique-numérique à des intervalles réguliers pour indiquer au convertisseur de numériser l'image, et envoie d'autre part un signal aux moyens pour stocker l'information numérique de façon à stocker cette information séquentiellement en incluant les données provenant des moyens pour encoder l'azimut.

Cette caméra est particulièrement adaptée pour prendre des vues panoramiques de paysages variés ou pour prendre une vue de 360° d'une chambre, d'une pièce ou d'un puits d'accès. L'avantage de cette caméra est de pouvoir immédiatement visualiser l'image au fur et à mesure qu'elle est prise, et de pouvoir stocker l'image sous forme numérique pour ensuite la traiter de différentes façons, préférablement à l'aide d'un système informatique.

### BRÈVE DESCRIPTION DES DESSINS

L'invention sera mieux comprise à la lecture de la description non limitative qui va suivre d'un mode de réalisation préféré de celle-ci, faite en se référant aux dessins annexés dans lesquels:
la Figure 1 est une vue schématique de la caméra selon un mode préféré de réalisation de l'invention;
la Figure 2 est une vue schématique d'un premier type de moyens pour entraîner en rotation le boîtier de la caméra de la Figure 1;
la Figure 3 est une vue schématique d'un second type de moyens pour entraîner en rotation le boîtier de la caméra de la Figure 1;
la Figure 4 est une vue schématique du système d'éclairage selon un mode de réalisation préféré;
la Figure 5 est une vue de coupe d'un des réflecteurs de la caméra panoramique;
la Figure 6 est une vue de coupe de côté du réflecteur de la Figure 5;
la Figure 7 est une représentation schématique du faisceau lumineux émis par le réflecteur de la Figure 5; et
la Figure 8 est une représentation schématique du fonctionnement de la caméra de la Figure 1.

### DESCRIPTION D'UN MODE DE RÉALISATION PRÉFÉRÉ DE L'INVENTION

La description qui va suivre, et qui est illustrée, de la caméra panoramique selon le mode de réalisation préféré sera faite en référence à une caméra adaptée à prendre une vue panoramique d'un puits d'accès d'un réseau souterrain. Plus particulièrement, dans le cas de puits d'accès d'un réseau électrique, il est dangereux d'y avoir une personne présente lorsque les câbles électriques sont sous tension puisqu'il existe des risques d'explosion. Par conséquent, il est avantageux de descendre la caméra selon l'invention dans le puits d'accès pour y prendre une vue panoramique et ainsi réduire le risque de blessures corporelles à une personne devant pénétrer dans un tel puits d'accès. Cependant, il est entendu que la caméra ci-décrite peut être utilisée pour prendre toute autre vue panoramique.

Les avantages d'utiliser la caméra selon l'invention pour ce faire sont sa rapidité de prendre une vue panoramique, la possibilité de visionner le résultat immédiatement et pouvoir aisément traiter l'image en utilisant un logicial approprié.

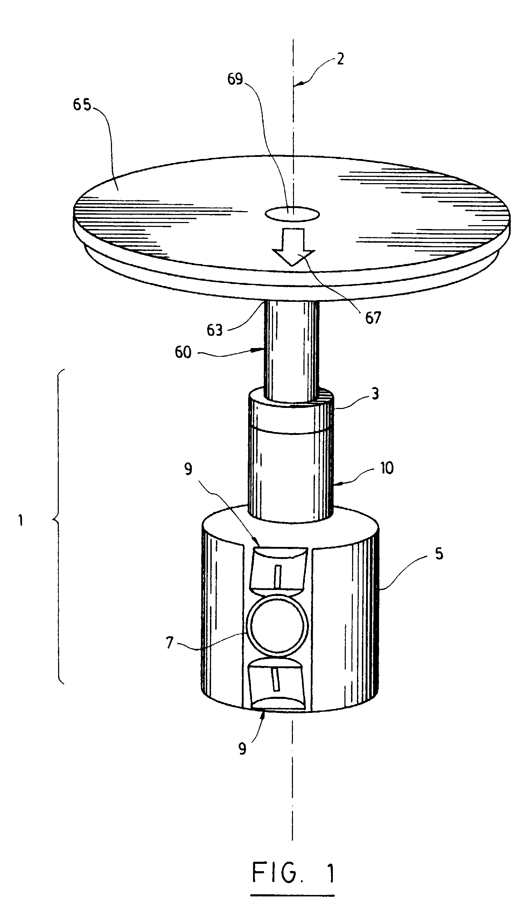

La caméra panoramique 1 selon l'invention telle qu'elle est illustrée comprend un boîtier 10 ayant un axe longitudinal 2. Le boîtier 10 inclut une première partie 3 coaxiale à l'axe longitudinal 2 et une deuxième partie 5 également coaxiale audit axe 2. La deuxième partie 5 peut être entraînée en rotation autour de l'axe longitudinal 2 par rapport à la première partie 3 à l'aide de moyens 100 pour l'entraîner en rotation (non représentés sur la Figure 1). À cet effet, la deuxième partie 5 du boîtier 10 est reliée à la première partie 3 du boîtier au moyen d'un roulement à billes 71, monté sur une tige 60, coaxiale à l'axe 2, à l'extrémité inférieure 61 de la tige 60.

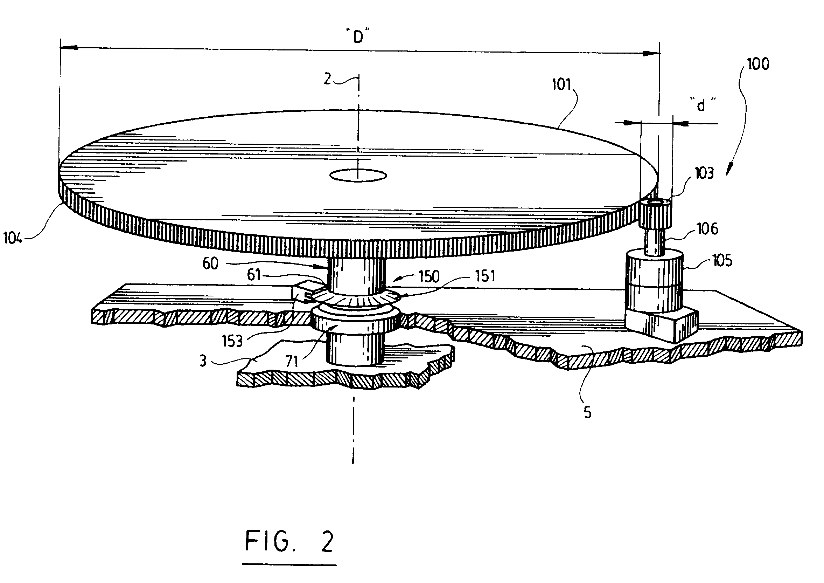

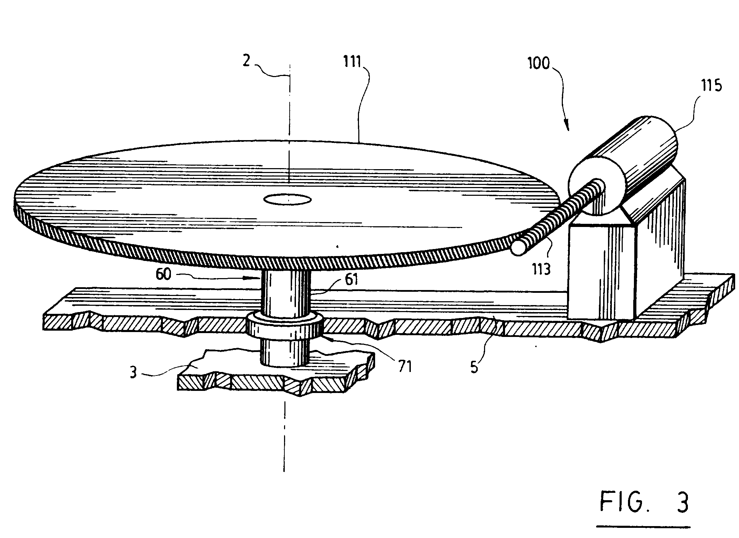

Les Figures 2 et 3 représentent deux moyens 100 différents utilisables pour entraîner en rotation la deuxième partie 5 du boîtier 10 selon l'invention. Il est toutefois entendu que toute autre façon d'entraîner en rotation la deuxième partie 5 du boîtier 10 pourrait aussi être utilisé.

Sur la Figure 2, les moyens 100 pour entraîner en rotation la deuxième partie 5 du boîtier 10 comprennent un engrenage ayant une première roue 101 coaxiale à l'axe 2. Cette première roue 101 est fixée sur la première partie 3 du boîtier et a un diamètre D et une circonférence dentée 104. L'engrenage a une deuxième roue 103, ayant un diamètre d beaucoup plus petit que le diamètre D de la première roue 101. La deuxième roue 103 peut voyager le long de la circonférence 104 de la première roue et a un axe de rotation parallèle à l'axe longitudinal 2.

La deuxième roue 103 est entraînée par un moteur 105 sur réception d'un signal de contrôle. La deuxième roue 103 est montée sur un axe 106 de sortie de moteur. L'entraînement en rotation de la deuxième roue 103 par le moteur amène celle-ci à tourner par rapport à la première roue 101. Le moteur 105 est fixé à la deuxième partie 5 du boîtier 1.

Sur la Figure 3, les moyens 100 pour entraîner en rotation la deuxième partie 5 du boîtier 10 comprennent une roue engrenage 111 dont la périphérie est en contact avec une vis sans fin 113. La vis sans fin 113 est entraînée par un moteur 1 15, préférablement du type pas à pas, fixé sur la deuxième partie 5 du boîtier 10. L'entraînement de la vis sans fin 113 amène la deuxième partie 2 du boîtier 10 à tourner par rapport à la première partie 3.

Tel qu'il est illustré sur la Figure 1, une lentille 7 est montée sur la deuxième partie 5 du boîtier 10. Cette lentille 7 est orientée perpendiculairement et radialement à l'axe longitudinal 2. Préférablement, cette lentille 7 est un lentille à grand angulaire.

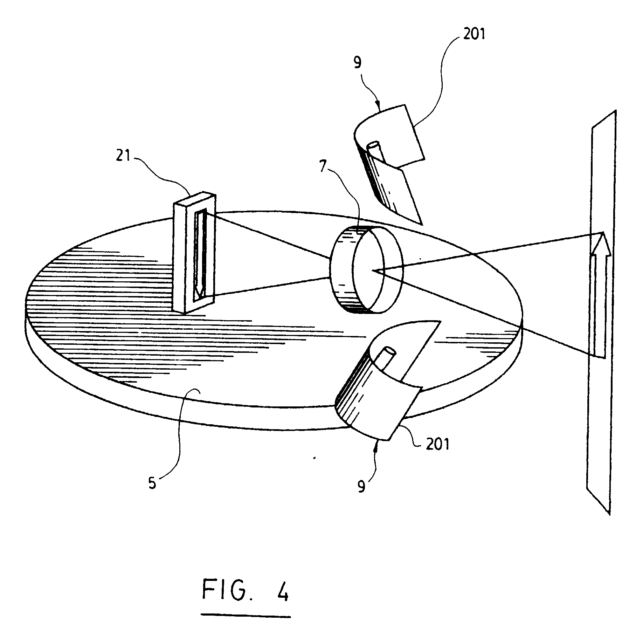

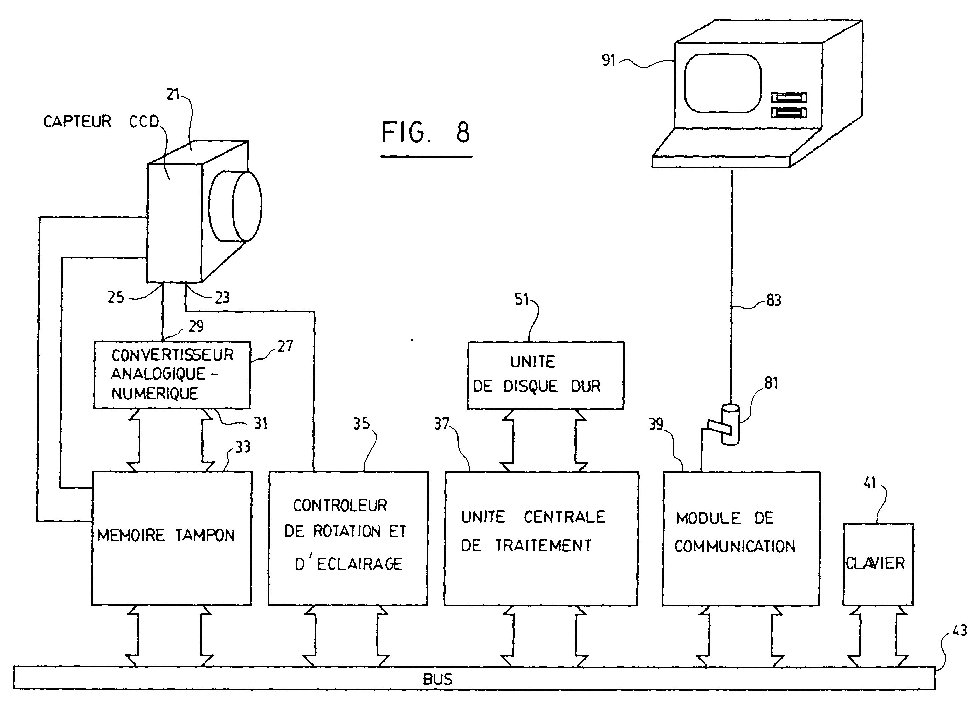

Tel que mieux illustré sur les Figures 4 et 8, un capteur linéaire CCD 21 est placé au foyer de la lentille 7 de façon à pouvoir recueillir les images transmises par celle-ci. Le capteur linéaire 21 a une entrée 23 pour un signal de contrôle et une sortie 25 de signal analogique. Un convertisseur analogique-numérique 27 est relié au capteur linéaire 21 pour convertir le signal analogique provenant du capteur linéaire 21 en information numérique. Le convertisseur 27 a une entrée 29 pour le signal analogique provenant du capteur linéaire 21, une entrée pour un signal de contrôle et une sortie 31 pour l'information numérique.

Le capteur linéaire CCD 21 est préférablement une barette linéaire trois couleurs, ayant donc une sortie analogique par couleur. Ainsi, chaque ligne de l'image pourrait être numérisée en fonction de trois couleurs de base. Cependant, lorsque la caméra panoramique 1 est utilisée pour faire un relevé d'un puits d'accès souterrain, seule la sortie représentant la couleur rouge est utilisée, puisque c'est à cette longueur d'onde que la barette est le plus sensible. De plus, pour les fins d'un relevé de puits d'accès, ceux-ci étant relativement monochrome, seulement une couleur est réellement nécessaire.

Pour obtenir une bonne résolution de l'image, chaque ligne du capteur linéaire 21 compte préférablement 2048 pixels.

Ainsi, lorsque le signal analogique est acheminé vers le convertisseur analogique-numérique 27, celui-ci numérise chacun des pixels, préférablement sous forme de 8 bits par pixel, pour obtenir une bonne résolution. Cependant, pour d'autres applications, il peut être avantageux de numériser chaque pixel sous forme de 16 ou 32 bits par pixel, dépendant de la résolution requise.

Le convertisseur analogique-numérique 27 est soit de type flash ou de type approximation successive. Le convertisseur analogique-numérique 27 inclut préférablement un amplificateur vidéo à son entrée pour pouvoir obtenir une amplitude appropriée pour les pixels.

De façon à pouvoir stocker les images numérisées, la caméra panoramique 1 comprend également des moyens 51 pour stocker l'information numérique provenant du convertisseur analogique-numérique 27, préférablement sous la forme d'une unité de disque dur. Toutefois, tout autre moyen pourrait être utilisé pour stocker cette information de façon à pouvoir la récupérer par la suite.

Des moyens 150 sont prévus pour encoder l'azimut de la caméra. Ces moyens ont une sortie pour des données relatives à l'azimut. Tel qu'illustré à la Figure 2, les moyens 150 pour encoder l'azimuth peuvent comprendre une roue d'azimut 151 et un encodeur optique 153. L'encodeur optique 153 a une sortie de pour envoyer des signaux de synchronization à un contrôleur de rotation 35, qui sont par la suite retransmis au capteur CCD 21.

Un système de contrôle est incorporé à la caméra pour contrôler la rotation du boîtier, envoyer un signal de contrôle au convertisseur analogique-numérique 27 de numériser l'image et envoyer un signal aux moyens pour stocker l'information numérique transmise par le convertisseur.

Le système de contrôle qui est illustré sur la Figure 8 comprend le contrôleur de rotation et d'éclairage 35, une unité centrale de traitement 37, un module de communication 39, préférablement de communication en série, et un clavier 41. De préférence, le système de contrôle comprend également une mémoire tampon 33 reliée au convertisseur analogique-numérique 27. D'autres unités peuvent venir compléter cet arrangement sans pour autant s'éloigner du principe de l'invention. De plus, les différents modules illustrés à la Figure 8 le sont de façon schématique, et il doit être entendu que ces modules pourraient tous être intégrés dans un seul, en autant que les fonctions de base soient présentes.

Préférablement, toutes les unités du système de contrôle sont reliées entre elles à l'aide d'un bus de communication 43, de préférence celui généralement dénoté comme "ISA/PC-104".

Preférablement, le système de contrôle est un micro-ordinateur.

En usage, lorsque la deuxième partie 5 est entraînée en rotation, le système de contrôle envoie d'une part un signal de contrôle au convertisseur analogique-numérique 27 à des intervalles réguliers pour indiquer au convertisseur de numériser l'image et envoie d'autre part un signal aux moyens 51 pour stocker l'information numérique de façon à stocker ladite information séquentiellement en incluant les données provenant desdits moyens 150 pour encoder l'azimut.

Plus précisément, lorsqu'une commande est donnée d'effectuer une prise panoramique, l'unité centrale de traitement 37 envoie un signal au contrôleur de rotation et d'éclairage 35. Un signal est envoyé aux moyens 100 d'entraîner en rotation la deuxième partie 5 du boîtier 10. À des intervalles réguliers, soit préférablement 4' d'arc résultant en une image d'environ 5000 lignes, l'encodeur optique 153 envoie un signal au capteur CCD 21 d'acheminer l'information analogique représentant une ligne de l'image au convertisseur analogique-numérique 27, qui procède à la numérisation de chaque pixel. Une fois les pixels numérisés, ils sont stockés dans la mémoire tampon 33. Lorsque le capteur CCD 21 achemine l'information analogique au convertisseur analogique-numérique, le capteur CCD 21 envoie un signal à la mémoire tampon représentant de l'information sur les pixels et sur la ligne numérisée, en l'occurence les données provenant des moyens 150 pour encoder l'azimut. Cette information est stockée avec l'information représentant les pixels numérisés. Ainsi, à chaque fois d'une ligne d'information est numérisée et stockée, elle contient egalement de l'information par rapport à chaque pixel et à l'azimut de la caméra. Cette information est récupérée par la suite. Ainsi, lorsque la caméra 1 est utilisée pour effectuer un relevé de puits d'accès, l'information peut être récupérée et analysée pour pouvoir correctement identifier les câbles et leur orientation spatiale.

La mémoire tampon 33 peut, dépendant de sa taille, mémoriser seulement un pixel, une ligne ou un groupe de lignes. Une fois la mémoire tampon pleine, son information est transférée de façon séquentielle aux moyens 51 de stocker l'information, soit en l'occurence une unité de disque dur.

La configuration de la caméra décrite plus haut est particulièrement adaptée à la prise de vue panoramique. Lorsque l'utilisateur est à proximité de la caméra, il peut la mettre en marche directement. Cependant, lorsque la caméra est utilisée pour faire un relevé de puits d'accès d'une compagnie hydro-électrique, il existe soit des dangers, soit une impossibilité à avoir un utilisateur présent dans le puits d'accès. Un dispositif d'opération à distance est alors prévu.

A cet effet, la première partie 3 du boîtier est fixée à l'extrémité inférieure 61 d'une tige 60, tel que mentionné précedemment. La tige a une partie supérieure 63 pouvant être pourvue d'une pièce 65 adaptée à remplacer le couvercle d'un puits d'accès. Cette pièce 65 peut être de plus pourvue d'une flèche 67 de marquage pour orienter la caméra 1 vers le nord lorsqu'un relevé de puits d'accès est effectué.

La tige 60 est évidée et comprend un passage central 69 dans lequel passe un câble coaxial 83 (voir la Figure 8). Le module de communication 39 est connecté à une bague collectrice 81, ainsi que le câble coaxial 83. De cette façon, la caméra 1 peut être contrôlée à distance au moyen d'une unité 91 communiquant avec la caméra 1. Préférablement, la communication entre l'unité 91 et la caméra 1 est sérielle. Pour éviter d'avoir une pluralité de bagues collectrices ou d'avoir des bagues collectrices avec de multiples conducteurs, la caméra 1 et l'unité 91 sont en outre pourvues de modules de changement de direction pour la communication. Ainsi, une communication bi-directionnelle peut être établie entre l'unité 91 et la caméra 1.

Avantageusement, la caméra panoramique 1 peut comprendre aussi un système d'éclairage 9, lorsque la caméra est utilisée dans des endroits obscurs, tels un puits d'accès pour des câbles souterrains, i.e. hydro, téléphone, câblodistribution. Tel qu'illustré sur la Figure 4, ce système d'éclairage est de préférence composé de deux unité paraboliques 201 identiques.

Puisque la deuxième partie 5 du boîtier 10 est entraînée en rotation, il est essentiel que si un tel système d'éclairage est présent, il soit également monté sur la deuxième partie 5 du boîtier 10 pour permettre un éclairage direct sur les 360° de rotation de la deuxième partie 5 du boîtier 10. Afin d'économiser de l'énergie et pour pouvoir fournir un éclairage uniforme, les faisceaux lumineux sont de préférence des faisceaux étroits et verticaux.

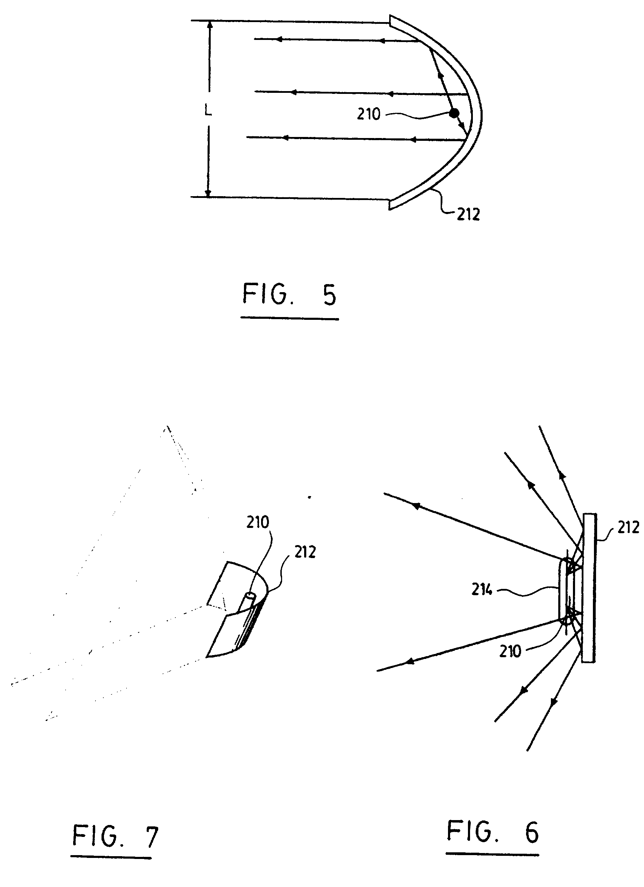

La Figure 5 montre qu'une source de lumière 210 placée au foyer d'un réflecteur parabolique 212 produit un faisceau lumineux ayant une largeur L le long de la hauteur du réflecteur parabolique 212. Si le réflecteur 212 est cylindrique, la largeur du faisceau demeure L mais, sur le plan vertical, le réflecteur agit comme un miroir plat et produit un faisceau à grand angle, tel qu'illustré aux Figures 6 et 7. Ainsi, si l'on utilise une ampoule linéaire 210 comme source de lumière, le faisceau résultant aura la forme illustrée à la Figure 7.

Chacune des unités paraboliques 201 peuvent, théoriquement, produire un faisceau de 180°. En pratique, le faisceau résultant n'est pas efficace sur la totalité. De plus, pour pouvoir obtenir un éclairage satisfaisant et pour avoir un minimum d'ombrages, le système d'éclairage 9 doit être placé parallèlement à l'axe de rotation 2 de la caméra 1. Tel que précédemment indiqué, deux unités 201 sont utilisées, une en haut de la lentille 7 et une en dessous de la lentille 7 Pour pouvoir obtenir un faisceau lumineux d'au moins 180°, chacunes de ces unités paraboliques sont inclinées à un angle d'environ 30° par rapport à la verticale, tel qu'illustré aux Figures 1 et 4.

Préférablement, pour éviter d'avoir une illumination directe provenant des ampoules linéaires 210, celles-ci sont masquées par une languette de métal 214, placée devant l'ampoule 210.

La caméra 1 est préférablement alimentée au moyen d'une pile (non représentée). Toutefois, elle pourrait être alimentée par fil.

Il va de soi que diverses autres modifications peuvent être apportées à la présente invention sans pour autant sortir du cadre de celle-ci telle que définie dans les revendications annexées.

## Revendications

1. Caméra panoramique comprenant:
un boîtier (10) ayant un axe longitudinal (2) et comprenant une première partie (3) coaxiale audit axe et une deuxième partie (5) également coaxiale audit axe, cette deuxième partie (5) pouvant être entraînée en rotation autour dudit axe longitudinal (2) par rapport à la première partie (3),
des moyens (100) pour entraîner en rotation la deuxième partie dudit boîtier;
une lentille (7) montée sur la deuxième partie (5) du boîtier, ladite lentille étant orientée perpendiculairement et radialement à l'axe longitudinal (2);
un capteur linéaire CCD (21) placé au foyer de la lentille (7) de façon à pouvoir recueillir les images transmises par la lentille (7), ledit capteur linéaire (21) ayant une entrée pour un signal de contrôle et une sortie de signal analogique représentant une ligne de l'image;
un convertisseur analogique-numérique (27) relié au capteur linéaire (21) pour convertir le signal analogique provenant du capteur linéaire en information numérique, ledit convertisseur (27) ayant une entrée pour le signal analogique provenant du capteur linéaire, une entrée pour un signal de contrôle et une sortie pour l'information numérique;
des moyens (51) pour stocker l'information numérique provenant du convertisseur analogique numérique;
des moyens (150) pour coder l'azimut de ladite caméra ayant une sortie pour des données relatives à l'azimut; et
un système de contrôle (35,37,39,41) pour contrôler la rotation du boîtier (10), envoyer un signal de contrôle audit convertisseur analogique-numérique (27) pour numériser l'image et envoyer un signal aux moyens (51) pour stocker l'information numérique transmise par le convertisseur, de sorte que, lorsque ladite deuxième partie (5) est entraînée en rotation, le système de contrôle envoie d'une part un signal de contrôle au convertisseur analogique-numérique (27) à des intervalles réguliers pour indiquer audit convertisseur de numériser l'image et envoie d'autre part un signal aux moyens pour stocker l'information numérique de façon à stocker ladite information séquentiellement en incluant les données provenant desdits moyens pour coder l'azimut.

2. Une caméra panoramique selon la revendication 1, caractérisée en ce que la lentille (7) est une lentille à grand angulaire.

3. Une caméra panoramique selon la revendication I ou 2, caractérisée en ce qu'elle comprend en outre:
un système (9) d'éclairage rectiligne comprenant deux unités paraboliques (201) orientées parallèlement et radialement à l'axe longitudinal et placées au dessus et au dessous de la lentille.

4. Une caméra panoramique selon la revendication 1, 2 ou 3, caractérisée en ce que:
- ladite première partie (3) comprend en outre une tige (60) coaxiale audit axe longitudinal, ayant une partie supérieure et une partie inférieure; et
- la deuxième partie (5) dudit boîtier est reliée à ladite première partie au moyen d'un roulement à billes (71) fixé à la partie inférieure de ladite tige.

5. Une caméra panoramique selon la revendication 4, caractérisée en ce que les moyens (150) pour coder l'azimut comprennent:
- une roue d'azimut (151) fixée à la périphérie de la partie inférieure de ladite tige; et
- un codeur d'azimut (153) ayant une entrée reliée à la roue d'azimut et une sortie reliée au système de contrôle, pour pouvoir orienter la caméra par rapport à une direction prédéterminée et pour pouvoir coder l'image avec des données provenant dudit codeur d'azimut.

6. Une caméra panoramique selon la revendication 1, 2, 3, 4 ou 5, caractérisée en ce que les moyens (100) pour entraîner en rotation la deuxième partie dudit boîtier comprennent:
- un engrenage composé d'une première roue (101) coaxiale audit axe longitudinal, ayant un diamètre donné et une circonférence, ladite première roue étant fixée sur ladite première partie du boîtier, et d'une deuxième roue (103) ayant un diamètre beaucoup plus petit que le diamètre de la première roue, pouvant voyager le long de la circonférence de ladite première roue (101), ladite deuxième roue (103) ayant une axe de rotation parallèle audit axe longitudinal; et
- un moteur électrique (105) activable par un signal de contrôle et ayant un axe de sortie relié à la deuxième roue pour entraîner en rotation ladite deuxième roue par rapport à ladite première roue, ledit moteur (105) étant fixé à la deuxième partie dudit boîtier et ladite entrée pour un signal de contrôle provenant du système de contrôle.

7. Une caméra panoramique selon la revendication 1, 2, 3, 4 ou 5, caractérisée en ce que lesdits moyens (100) pour entraîner en rotation la deuxième partie du boîtier comprennent:
- un engrenage à roue (111) et à vis sans fin (113), ladite roue (111) étant coaxiale audit axe longitudinal et fixée à ladite première partie dudit boîtier, ladite vis (113) sans fin étant fixée à un moteur (115) fixé sur ladite deuxième partie du boîtier, ledit moteur (115) étant activable par un signal de contrôle provenant du système de contrôle.

8. Une caméra panoramique selon la revendication 6 ou 7, caractérisée en ce que:
- le système de contrôle (35,37,39,41) comprend en outre une entrée pour commandes à distance;
- ladite tige est évidée, définissant un passage central, et comprend un câble coaxial à l'intérieur dudit passage central, ledit câble ayant une extrémité électriquement connectée à une bague collectrice située à la partie inférieure de ladite tige;
- le système de contrôle (35,37,39,41) étant également connecté à ladite bague collectrice.

9. Une caméra panoramique selon la revendication 8, caractérisée en ce que le système de contrôle est un micro-ordinateur.

10. Une caméra panoramique selon la revendication 9, caractérisée en ce que les moyens (51) pour stocker l'information numérique sont une unité de disque dur.
